# EUROPÄISCHE PATENTSCHRIFT

(11) **EP 1 588 066 B1**
(45) Veröffentlichungstag und Bekanntmachung des Hinweises auf die Patenterteilung: **09.09.2009**
(21) Anmeldenummer: 03795947.5
(22) Anmeldetag: 20.12.2003
(51) Int. Cl.: F16C 33/54

(54) **WÄLZLAGERKÄFIG**
ROLLING BEARING RETAINER
CAGE DE ROULEMENT

(30) Priorität: 27.01.2003 US 442835 P
(43) Veröffentlichungstag der Anmeldung: 26.10.2005
(73) Patentinhaber: Schaeffler KG, 91074 Herzogenaurach (DE)
(72) Erfinder: INCE, Marion, J., Mount Holly, NC 28120 (US)
(86) Internationale Anmeldenummer: PCT/EP2003/014688
(87) Internationale Veröffentlichungsnummer: WO 2004/067980

(56) Entgegenhaltungen:
- DE-A- 3 603 413
- DE-C- 931 684
- US-A- 3 787 104

## Beschreibung

### Anwendungsgebiet der Erfindung

Die Erfindung betrifft einen Wälzlagerkäfig für ein Zylinderrollenlager, der aus zwei Seitenringen besteht, die durch axial verlaufende gleichmäßig in Umfangsrichtung voneinander beabstandete Stege miteinander verbunden sind, so dass Taschen zur Aufnahme von Zylinderrollen gebildet sind, wobei die Stege wenigstens teilweise durch eine Drehung von etwa 90° um ihre Längsachse verdreht sind, so dass die Zylinderrollen am Herausfallen aus dem Käfig gehindert sind.

### Hintergrund der Erfindung

Die Tragzahl von Wälzlagern hängt unter anderem auch wesentlich von der Anzahl der Wälzkörper ab. Vollrollige Wälzlager beinhalten die größtmögliche Anzahl an Wälzkörpern und bieten somit ein theoretisches Tragzahloptimum. Ein Nachteil vollrolliger Wälzlager ist die höhere Reibung. Aufgrund dieser größeren Verlustleistung im Lager sinkt ihre Drehzahlgrenze auf etwa den halben Wert von Zylinderrollenlagern mit Käfige.

Um diese Nachteile zu eliminieren, ist es seit langem üblich, auf eine maximale Anzahl von Wälzkörpern zu verzichten und den somit gegenüber einer vollrolligen Ausführung gewonnenen Raum für einen Käfig auszunutzen. Damit sind herkömmliche Zylinderrollenlager mit Käfigen zwar bei höheren Drehzahlen betreibbar, müssen jedoch aufgrund des Platzbedarfs des Käfigs eine verringerte Anzahl von Zylinderrollen und damit eine Verringerung der Tragzahl hinnehmen.

Ein derartiges Wälzlager ist aus der DE 931 684 vorbekannt. Dessen Zylinderrollen sind in einem gattungsgemäßen Blechkäfig untergebracht, dessen Stege mit Vorsprüngen versehen sind, die in radialer Richtung verdreht werden, so dass benachbarte Wälzkörper im Bereich des Teilkreises durch die Blechstärke voneinander getrennt sind. Dieser Blechkäfig besteht jedoch aus einem dünnen Material, so dass er in einem Lager, welches sehr hohen Belastungen ausgesetzt ist, überhaupt nicht verwendet werden kann. Ein anderer Nachteil besteht darin, dass zwischen zwei benachbarten Wälzkörpern in Umfangsrichtung ein relativ großer Abstand vorhanden ist. Dieser setzt sich aus der eigentlichen Stegbreite und den umgebogenen Vorsprüngen zusammen. Hinzu kommt, dass die Biegeradien der umgebogenen Vorsprünge diese Stegbreite zusätzlich noch vergrößern.

Ein anderer gattungsgemäßer Käfig mit verdrehten Stegen ist aus der DE 36 03 413 A1 vorbekannt. Dieser ist ebenfalls aus Blech gefertigt und weist Stege auf, die sich mit ihren axialen Enden über einen Teil der Breite der Seitenringe in diese hinein erstrecken und durch eine 90°-Drehung um ihre Achse radial gerichtet sind. Außerdem weisen die Stege Haltelappen auf, die abwechselnd in die eine bzw. in eine andere benachbarte Tasche hineingebogen sind. Diese Haltelappen sind dabei von radialen Einschnitten begrenzt, die bereits im flachen Zustand des Käfigbandes angebracht sind. Auch dieser Käfig weist den Nachteil einer sehr geringen Stabilität auf.

### Zusammenfassung der Erfindung

Der Erfindung liegt die Aufgabe zu Grunde, einen gattungsgemäßen Käfig mit wenigsten teilweise verdrehten Stegteilen so zu verbessern, dass er im Teilkreisbereich trotz geringer Stegbreite eine genügende Stabilität aufweist.

Erfindungsgemäß wird diese Aufgabe nach dem kennzeichnenden Teil von Anspruch 1 in Verbindung mit dessen Oberbegriff dadurch gelöst, dass in einem Mittelteil der Stege an einer Umfangsseite je ein Vorsprung angeordnet ist, die durch ein Verdrehen dieses Stegmittelteils um seine axiale Mittellinie zu Haltenasen umgeformt werden, die, bezogen auf einen Lagermittelpunkt, im umgebogenen Zustand über einen Teilkreisradius hinaus reichen und jeweils zwei benachbarte Zylinderrollen voneinander trennen und ein Herausfallen der Zylinderrollen in einer radialen Richtung verhindern, wobei diese radial ausgerichteten Haltenasen über je zwei beidseitig in axialer Richtung sich anschließende verdrehte Stegteile mit je einem äußeren unverdrehten Stegteil verbunden sind, die außerhalb des Teilkreises angeordnet sind und ein Herausfallen der Zylinderrollen in der anderen radialen Richtung verhindern.

Auf diese Weise ist ein Käfig hoher Festigkeit und niedrigen Gewichtes geschaffen, der aufgrund einer maximalen Unterbringung von Zylinderrollen eine hohe Tragzahl aufweist. Die Unterbringung einer Vielzahl von Zylinderrollen wird möglich, weil durch das Verdrehen des Stegmittelteils um etwa 90° lediglich die verwendete Materialstärke des Käfigmaterials benachbarte Zylinderrollen in Umfangsrichtung auf Abstand hält. D. h., der Umfangsabstand von Zylinderrolle zu Zylinderrolle ist sehr gering. Gleichzeitig ist aber bei diesem geringen Abstand in Umfangsrichtung eine hohe Stabilität des Käfigs gegeben, weil in radialer Richtung die Stege eine genügende räumliche Ausdehnung aufweisen. Ein weiterer Vorteil dieses gattungsgemäßen Käfigs liegt darin, dass durch die Innen- und durch die Außenhalterung ein Rollenkranz gebildet werden kann, der durch die formschlüssige Halterung der Zylinderrollen gut handhabbar ist.

Weitere vorteilhafte Ausgestattungen des erfindungsgemäßen Käfigs sind in den Unteransprüchen beschrieben.

So ist nach Anspruch 2 vorgesehen, dass die Haltenasen gegenüber den anderen Stegteilen in ihrer Stärke verringert sind. Dadurch wird noch mehr Platz für die in Taschen aufnehmenden Zylinderrollen geschaffen, weil der Umfangsabstand von Zylinderrolle zu Zylinderrolle durch diese nochmals verringerte Materialstärke des Käfigmaterials bei gleichzeitig nicht verringerter Festigkeit gewährleistet ist.

Nach einem weiteren Merkmal der Erfindung gemäß Anspruch 3 soll der Wälzlagerkäfig aus einem Blechband gebildet sein, dessen Enden nach dem Ausstanzen der Taschen und nach dem Verdrehen der an den Stegen angeordneten Vorsprünge zu Haltenasen rundgebogen und durch einen Schweißvorgang miteinander verbunden sind.

Nach einem weiteren zusätzlichen Merkmal der Erfindung nach Anspruch 4 soll der Wälzlagerkäfig aus einem rohrförmigen Hohlkörper gebildet sein, dessen Taschen ausgestanzt und dessen an den Stegen angeordnete Vorsprünge durch Verdrehen zu Haltenasen umgeformt sind.

Nach Anspruch 5 soll der Wälzlagerkäfig in einem Planetenradlager in einem Automatikgetriebe für ein Kraftfahrzeug angeordnet sein, wobei nach Anspruch 6 vorgesehen ist, dass er außengeführt ist.

Die Erfindung wird an nachstehenden Ausführungsbeispielen näher erläutert.

### Kurze Beschreibung der Zeichnungen

Es zeigen:
- Figur 1: einen Ausschnitt aus einer perspektivischen Darstellung eines erfindungsgemäßen Käfigs,
- Figur 2: eine Draufsicht auf einen Steg mit einem angeformten Vorsprung im nicht umgebogenen Zustand,
- Figur 3: eine Draufsicht auf einen Steg im umgebogenen Zustand,
- Figur 4: einen Ausschnitt aus einer Draufsicht auf ein profiliertes Blechband mit unverdrehtem Stegteil,
- Figur 5: einen Querschnitt entlang der Linie V-V in Figur 4,
- Figur 6: einen Ausschnitt aus einer Draufsicht auf ein Blechband mit verdrehtem Stegteil,
- Figur 7: einen Querschnitt entlang der Linie VII-VII in Figur 6,
- Figur 8: einen Längsschnitt durch einen erfindungsgemäß ausgebildeten Käfig,
- Figur 9: eine vergrößerte Darstellung eines Schnittes entlang der Linie IX-IX in Figur 8 und
- Figur 10: einen Schnitt entlang der Linie IX-IX bei einem Käfig nach dem Stand der Technik.

### Ausführliche Beschreibung der Zeichnungen

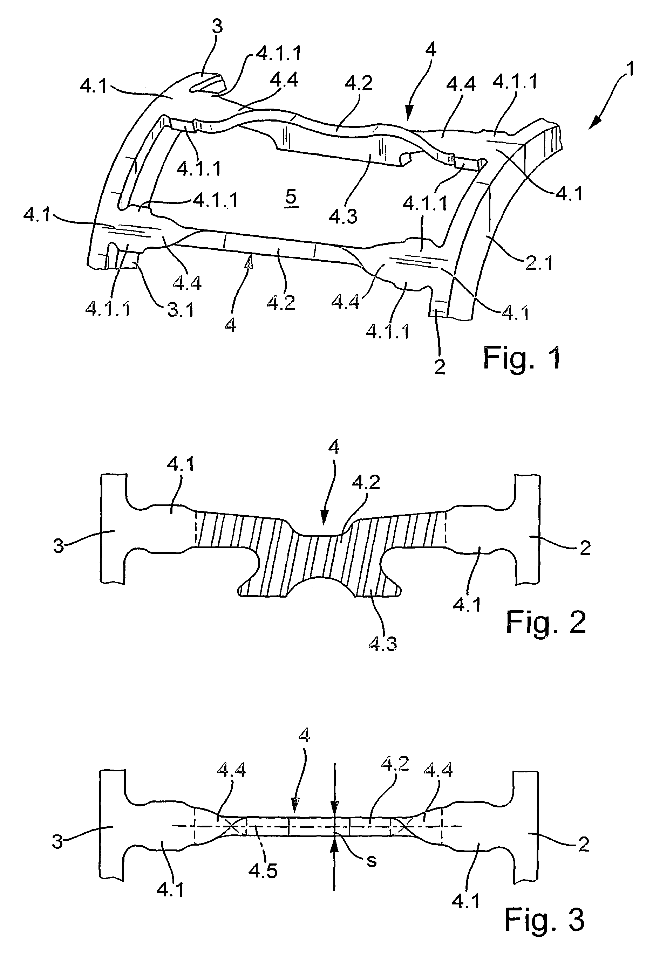

Der in Figur 1 im Ausschnitt in perspektivischer Darstellung gezeigte und mit 1 bezeichnete erfindungsgemäße Wälzlagerkäfig besteht aus den Seitenringen 2 und 3, die mit radial nach innen gerichteten Borden 2.1 und 3.1 versehen sind und durch Stege 4 miteinander verbunden sind. Auf diese Weise sind Taschen 5 zur Aufnahme von Wälzkörpern 6 gebildet, die aus Gründen einer zeichnerischen Vereinfachung nicht dargestellt sind. Wie die genannte Figur weiter erkennen lässt, bestehen die einzelnen Stege 4 aus mehreren Teilen. Direkt an die beiden Seitenringe 2, 3 schließt je ein äußeres Stegteil 4.1 an, das die gleiche radiale Ausdehnung wie die Seitenringe 2 und 3 besitzt. Mit einem Teil der Mantelfläche der Seitenringe 2, 3 und einem Teil der Mantelfläche des äußeren Stegteils 4.1 würde ein außengeführter Käfig in einer nicht gezeigten Aufnahmebohrung einer beliebigen Anschlusskonstruktion anliegen.

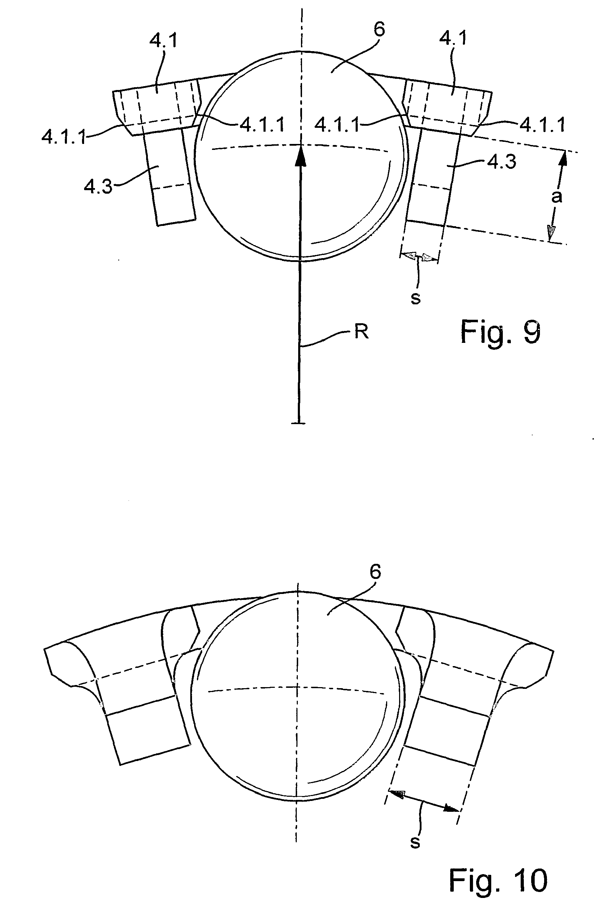

Jeder Steg 4 weist ein Stegmittelteil 4.2 auf, das im unverdrehten Zustand an einer Umfangsseite durch einen Vorsprung 4.3 verlängert ist. Durch ein Verdrehen um etwa 90° um die Mittellinie 4.5 dieses Stegmittelteils 4.2 wird der Vorsprung 4.3 radial nach innen ausgerichtet, so dass zwei benachbarte in Umfangsrichtung voneinander beabstandete Vorsprünge 4.3 eines fertigen Käfigs 1 als Haltenasen wirken, die ein Herausfallen der Zylinderrollen 6 radial nach innen verhindern. Diese Haltenasen sind innerhalb des Teilkreises R angeordnet. Die zeichnerische Darstellung des Teilkreises R geht aus Figur 9 hervor. Das Verdrehen des Stegmittelteils 4.2 muss dabei so erfolgen, dass die beiden äußeren Stegteile 4.1 in ihrer Lage nicht verändert werden. Das bedeutet, durch dieses Verdrehen des Stegmittelteils 4.2 werden zwei die Verdrehung aufnehmende Stegteile 4.4 gebildet, die dieses Stegmittelteil 4.2 mit den beiden äußeren Stegteilen 4.1 verbinden. Die äußeren Stegteile 4.1 sind beiderseits mit Haltenasen 4.1.1 versehen, so dass ein Herausfallen der Zylinderrollen 6 radial nach außen verhindert ist. Die Haltenasen 4.1.1 sind außerhalb des Teilkreises R angeordnet.

In Abwandlung von Figur 1 ist es auch möglich, dass die beiden äußeren unverdrehten Stegteile 4.1 am radial innen liegenden Ende der Borde 2.1, 3.1 angeordnet sind. Durch das Verdrehen des Stegmittelteils 4.2 wird durch die Vorsprünge 4.3 ein Herausfallen der Zylinderrollen 6 radial nach außen verhindert. Radial nach innen wird das Herausfallen der Zylinderrollen durch die Haltenasen 4.1.1 verhindert. In diesem Fall liegen die durch Verdrehen des Stegmittelteils 4.2 erzeugten Haltenasen außerhalb des Teilkreises R und die Haltenasen 4.1.1 innerhalb des Teilkreises R.

Aus Figur 2 ist ersichtlich, dass der Vorsprung 4.3 im Prinzip jede beliebige Form annehmen kann und Figur 3 zeigt, dass der Umfangsabstand von benachbarten Zylinderrollen 6 lediglich durch die verwendete Materialstärke s beeinflusst wird. Je kleiner der Betrag von s ist, umso mehr Zylinderrollen 6 sind im Käfig 1 unterbringbar und um so höher ist die Tragfähigkeit des Lagers. Wird nun, wie in Figur 2 durch die schraffierte Fläche verdeutlicht, innerhalb der axialen Ausdehnung eines Steges 4 verschieden dickes Material verwendet, so lässt sich die Materialstärke s in Umfangsrichtung noch einmal verringern. Anders ausgedrückt, die durch die Schraffur gekennzeichnete Fläche sollte eine Materialdicke s aufweisen, die kleiner als die Dicke s des übrigen Materials ist.

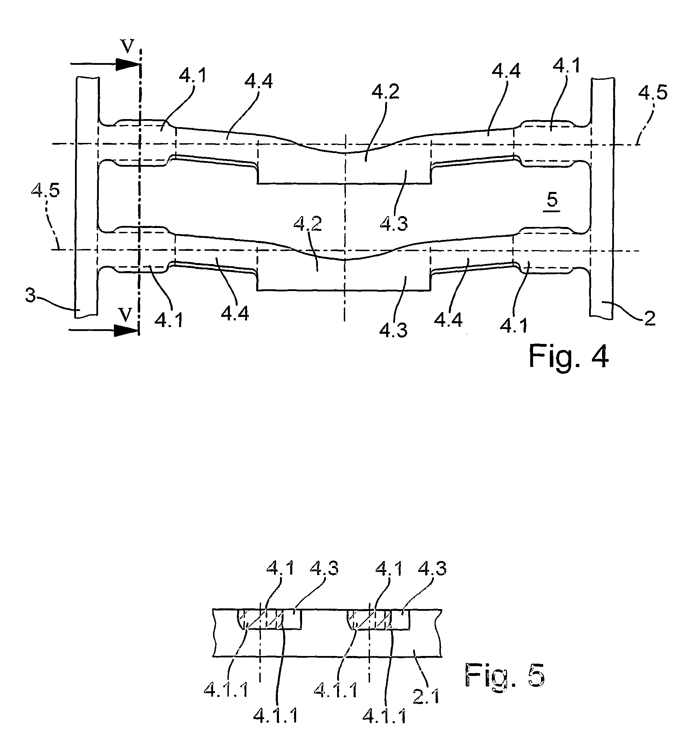

In den Figuren 4 bis 8 ist die Herstellung eines erfindungsgemäßen Käfigs 1 aus einem Flachband gezeigt. Wie Figur 4 erkennen lässt, werden in das Flachband zunächst die Stege 4 ausgestanzt, so dass Taschen 5 zur Aufnahme der Zylinderrollen 6 gebildet sind. Vorher ist das Band so profiliert worden, dass Seitenringe 2, 3 mit rechtwinklig abgewinkelten Borden 2.1, 3.1 gebildet sind. Die Stege 4 weisen das Mittelteil 4.2 auf, das mit einem Vorsprung 4.3 versehen ist. Dieser Stegmittelteil 4.2 ist über zwei Stegteile 4.4 mit den äußeren Stegteilen 4.1 verbunden, an die sich die Seitenringe 2, 3 anschließen. Wie Figur 5 zeigt, sind nach dem Ausstanzen der Stege 4 die Vorsprünge 4.3 noch nicht umgebogen. An den äußeren Stegteilen 4.1 sind die späteren Haltenasen 4.1.1 deutlich zu erkennen, die ein Herausfallen der Zylinderrollen 6 in radialer Richtung nach außen verhindern sollen.

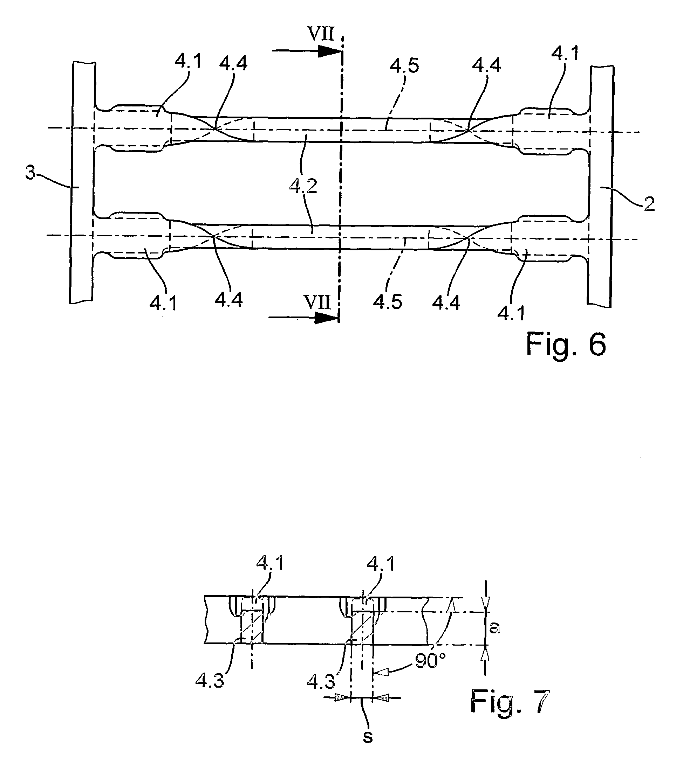

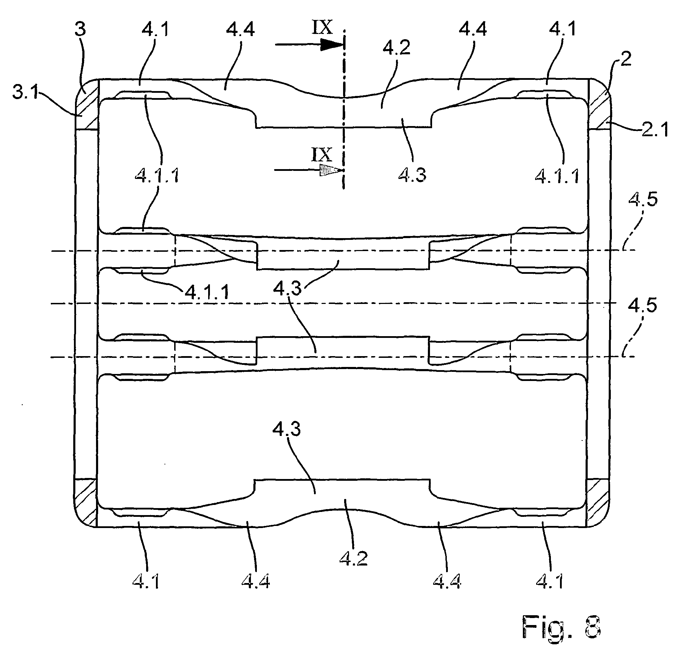

In den Figuren 6 und 7 ist das gleiche Band noch einmal, allerdings mit verdrehtem Stegmittelteil 4.2 gezeigt. Wie Figur 7 zeigt, ist das Stegmittelteil 4.2 um 90° entlang seiner axialen Mittellinie 4.5 verdreht worden, so dass der Vorsprung 4.3 seine radial ausgerichtete Lage einnimmt. Figur 6 ist deutlich entnehmbar, dass die durch das Verdrehen des Stegmittelteils 4.2 ausgelöste Verdrillung in Form einer spiralförmig verdrehten Biegung von den beiden Stegbereichen 4.4 aufgenommen ist. Der in Figur 8 gezeigte fertige Käfig 1 wird dadurch hergestellt, dass das Band entsprechend der späteren gewünschten Umfangsausdehnung des Käfigs 1 entsprechend abgelängt wird, rundgebogen und an seinen beiden Enden miteinander verschweißt wird.

Der Figur 9 ist entnehmbar, dass der Abstand der Zylinderrollen 6 voneinander durch die Materialstärke s der Haltenasen in Umfangsrichtung bestimmt ist, während die Stabilität des Käfigs 1 durch die Materialstärke a in radialer Richtung gesichert ist. Dies bedeutet, dass trotz einer maximalen Unterbringung von Zylinderrollen 6 im Käfig 1, bedingt durch die geringe Materialstärke s in Umfangsrichtung, dessen Stabilität nicht verloren geht, bedingt durch die Materialstärke a in radialer Richtung. Aus der genannten Figur ist deutlich erkennbar, dass s < a ist. Es ist weiter erkennbar, dass die Zylinderrollen 6 von den zu Haltenasen umgeformten Vorsprüngen 4.3 bis in den Bereich des Teilkreises R hinein umfasst werden. Ein Vergleich der Figur 9 mit Figur 10, die einen Ausschnitt eines Käfigs nach dem bisherigen Stand der Technik zeigt, macht deutlich, dass dessen Materialstärke s in Umfangsrichtung wesentlich über der Materialstärke s eines erfindungsgemäßen Käfigs 1 liegt. Dies bedeutet, dass bei ansonsten gleichen Abmessungen beider Käfige im erfindungsgemäßen Käfig 1 mehr Zylinderrollen 6 untergebracht werden können.

### Bezugszeichen

- 1: Wälzlagerkäfig
- 2: Seitenring
- 2.1: Bord
- 3: Seitenring
- 3.1: Bord
- 4: Steg
- 4.1: äußeres Stegteil
- 4.1.1: Haltenase
- 4.2: Stegmittelteil
- 4.3: Vorsprung
- 4.4: verdrehtes Stegteil
- 4.5: axiale Mittellinie
- 5: Tasche
- 6: Zylinderrolle

- s: Materialstärke in Umfangsrichtung
- a: Materialstärke in radialer Richtung
- R: Teilkreisradius

## Patentansprüche

1. Wälzlagerkäfig (1) für ein Zylinderrollenlager, der aus zwei Seitenringen (2,3) besteht, die durch axial verlaufende gleichmäßig in Umfangsrichtung voneinander beabstandete Stege (4) miteinander verbunden sind, so daß Taschen (5) zur Aufnahme von Zylinderrollen (6) gebildet sind, wobei die Stege (4) wenigstens teilweise durch eine Drehung von etwa 90° um ihre Längsachse (4.5) verdreht sind, so daß die Zylinderrollen (6) am Herausfallen aus dem Käfig (1) gehindert sind, **dadurch gekennzeichnet, dass** in einem Mittelteil (4.2) der Stege (4) an einer Umfangsseite je ein Vorsprung (4.3) angeordnet ist, wobei die Vorsprünge durch ein Verdrehen dieses Stegmittelteils (4.2) um ihre Längsachse (4.5) zu Haltenasen umgeformt werden, die, bezogen auf einen Lagermittelpunkt, im umgebogenen Zustand über einen Teilkreisradius (R) hinausreichen und jeweils zwei benachbarte Zylinderrollen (6) voneinander trennen und ein Herausfallen der Zylinderrollen (6) in einer radialen Richtung verhindern, wobei diese radial ausgerichteten Haltenasen über je zwei beidseitig in axialer Richtung sich anschließende verdrehte Stegteile (4.4) mit je einem äußeren unverdrehten Stegteil (4.1) verbunden sind, die außerhalb des Teilkreises (R) angeordnet sind und ein Herausfallen der Zylinderrollen (6) in der anderen radialen Richtung verhindern.

2. Wälzlagerkäfig (1) nach Anspruch 1, **dadurch gekennzeichnet, dass** die Haltenasen gegenüber den anderen Stegteilen (4.1,4.4) in ihrer Stärke s verringert sind.

3. Wälzlagerkäfig (1) nach Anspruch 1, **dadurch gekennzeichnet, dass** er aus einem Blechband gebildet ist, dessen Enden nach dem Ausstanzen der Taschen (5) und nach dem Verdehen der an den Stegen (4) angeordneten Vorsprünge (4.3) zu Haltenasen rundgebogen und durch einen Schweißvorgang miteinander verbunden sind.

4. Wälzlagerkäfig (1) nach Anspruch 1, **dadurch gekennzeichnet, dass** er aus einem rohrförmigen Hohlkörper gebildet ist, dessen Taschen (5) ausgestanzt und dessen an den Stegen (4) angeordnete Vorsprünge (4.3) durch Verdrehen zu Haltenasen umgeformt sind.

5. Wälzlagerkäfig (1) nach Anspruch 1, **dadurch gekennzeichnet, dass** er in einem Planetenradlager in einem Automatikgetriebe für ein Kraftfahrzeug angeordnet ist.

6. Wälzlagerkäfig (1) nach Anspruch 5, **dadurch gekennzeichnet, dass** er außengeführt ist.

## Claims

1. Rolling bearing retainer (1) for a cylindrical roller bearing, which rolling bearing retainer (1) consists of two side rings (2, 3) which are connected to one another by axially running webs (4) uniformly spaced apart in the circumferential direction, so that pockets (5) are formed for accommodating cylindrical rollers (6), the webs (4) being at least partly twisted by being rotated by about 90° about their longitudinal axes (4.5), so that the cylindrical rollers (6) are prevented from falling out of the retainer (1), **characterized in that** a respective projection (4.3) is arranged in a centre part (4.2) of the webs (4) on a circumferential side, the projections, by twisting this web centre part (4.2) about its longitudinal axis (4.5), being formed into holding lugs which, with regard to a bearing centre point, extend in the bent-over state beyond a pitch circle radius (R) and in each case separate two adjacent cylindrical rollers (6) from one another and prevent the cylindrical rollers (6) from falling out in a radial direction, these radially oriented holding lugs, via two respective twisted parts (4.4) adjoining on both sides in the axial direction, being connected to a respective outer non-twisted web part (4.1), these web parts (4.1) being arranged outside the pitch circle (R) and preventing the cylindrical rollers (6) from falling out in the other radial direction.

2. Rolling bearing retainer (1) according to Claim 1, **characterized in that** the holding lugs are reduced in their thickness s compared with the other web parts (4.1, 4.4).

3. Rolling bearing retainer (1) according to Claim 1, **characterized in that** it is formed from a sheet-metal strip, the ends of which, after the pockets (5) have been stamped out and after the projections (4.3) arranged on the webs (4) have been twisted, are bent in a circular shape to form holding lugs and are connected to one another by a welding operation.

4. Rolling bearing retainer (1) according to Claim 1, **characterized in that** it is formed from a tubular hollow body whose pockets (5) are stamped out and whose projections (4.3) arranged on the webs (4) are formed by twisting them into holding lugs.

5. Rolling bearing retainer (1) according to Claim 1, **characterized in that** it is arranged in a planet bearing in an automatic transmission for a motor vehicle.

6. Rolling bearing retainer (1) according to Claim 5, **characterized in that** it is externally guided.

## Revendications

1. Cage de palier à roulement (1) pour un palier à rouleaux cylindriques, qui se compose de deux bagues latérales (2, 3), qui sont connectées l'une à l'autre par des nervures (4) espacées uniformément les unes des autres dans la direction périphérique et s'étendant axialement, de sorte que des cavités (5) pour recevoir des rouleaux cylindriques (6) soient formées, les nervures (4) étant au moins en partie tournées par une torsion d'environ 90° autour de leur axe longitudinal (4.5), de sorte que les rouleaux cylindriques (6) ne puissent pas tomber hors de la cage (1), **caractérisée en ce que** dans une partie centrale (4.2) des nervures (4), sur un côté périphérique, on dispose à chaque fois une saillie (4.3), les saillies étant formées par une torsion de cette partie centrale de nervure (4.2) autour de son axe longitudinal (4.5) pour donner des ergots de retenue, qui, par rapport à un centre de palier, s'étendent dans l'état replié sur un rayon de cercle partiel (R) et séparent à chaque fois deux rouleaux cylindriques adjacents (6) l'un de l'autre et empêchent les rouleaux cylindriques (6) de tomber dans une direction radiale, ces ergots de retenue orientés radialement étant connectés par le biais de deux parties de nervure (4.4) tournées se raccordant de chaque côté dans la direction axiale, à une partie de nervure (4.1) extérieure non tournée respective, ces dernières étant disposées en dehors du cercle partiel (R) et empêchant les rouleaux cylindriques (6) de tomber dans l'autre direction radiale.

2. Cage de palier à roulement (1) selon la revendication 1, **caractérisée en ce que** les ergots de retenue ont une épaisseur s réduite par rapport aux autres parties de nervure (4.1, 4.4).

3. Cage de palier à roulement (1) selon la revendication 1, **caractérisée en ce qu'**elle est formée d'une bande de tôle dont les extrémités, après l'estampage des cavités (5) et après la torsion des saillies (4.3) disposées sur les nervures (4), sont recourbées pour former des ergots de retenue et sont connectées les unes aux autres par une opération de soudage.

4. Cage de palier à roulement (1) selon la revendication 1, **caractérisée en ce qu'**elle est formée d'un corps creux de forme tubulaire dont les cavités (5) sont estampées et dont les saillies (4.3) disposées sur les nervures (4) sont façonnées par torsion pour donner des ergots de retenue.

5. Cage de palier à roulement (1) selon la revendication 1, **caractérisée en ce qu'**elle est disposée dans un palier de roue planétaire dans une boîte de vitesses automatique pour un véhicule automobile.

6. Cage de palier à roulement (1) selon la revendication 5, **caractérisée en ce qu'**elle est guidée à l'extérieur.
